# FASCICULE DE BREVET EUROPEEN

(11) **EP 0 458 710 B1**
(45) Date de publication et mention de la délivrance du brevet: **22.02.1995**
(21) Numéro de dépôt: 91420160.3
(22) Date de dépôt: 17.05.1991
(51) Int. Cl.: H04M 9/02, H04M 1/72, H04M 3/50, H04Q 5/00

(54) **Système téléphonique à plusieurs terminaux téléphoniques sur une seule ligne**
Fernsprechsystem mit mehreren Fernsprechendgeräten auf einer einzelnen Leitung
Telephone system with a plurality of telephone terminals on a single line

(30) Priorité: 22.05.1990 FR 9006606
(43) Date de publication de la demande: 27.11.1991
(73) Titulaire: DOLPHIN INTEGRATION, F-38240 Meylan (FR)
(72) Inventeur: Dupillier, Christian, F-38000 Grenoble (FR)
(74) Mandataire: de Beaumont, Michel

(56) Documents cités:
- FR-A- 2 600 849
- US-A- 4 367 376
- US-A- 4 653 089

## Description

La présente invention concerne un système téléphonique destiné à être installé au domicile d'un abonné quine dispose que d'une seule ligne. L'invention concerne plus précisément un tel système téléphonique comprenant plusieurs terminaux téléphoniques pouvant se connecter sur la ligne d'abonné unique, ce système ayant pour fonctions de répondre automatiquement à un appel téléphonique et d'échanger automatiquement des informations avec l'appelant afin de l'aiguiller vers l'un des terminaux téléphoniques de son choix.

Dans certains systèmes d'interface téléphoniques un appareil du type répondeur permet de prendre la ligne à la suite d'un appel téléphonique, ce qui équivaut à décrocher un combiné téléphonique, puis de reconnaître un signal de numérotation supplémentaire émis sur la ligne par l'appelant et d'aiguiller en conséquence la ligne téléphonique vers un terminal souhaité. Pour réaliser une telle fonction, un circuit d'interface téléphonique, disposé entre la ligne téléphonique et un terminal, est prévu pour prendre la ligne en réponse à un signal de sonnerie, pour recevoir alors la numérotation supplémentaire émise par l'appelant, puis pour déclencher une action, par exemple une sonnerie, au niveau du terminal téléphonique souhaité.

Lors de l'installation d'un tel système au domicile de l'abonné, il est nécessaire de modifier le branchement des terminaux téléphoniques sur la ligne pour que ces terminaux ne puissent pas sonner lors d'un appel téléphonique. En effet, c'est le circuit d'interface téléphonique qui reçoit l'appel et qui envoie ensuite un signal de sonnerie spécial au niveau du seul terminal sélectionné. On inhibe donc la sonnerie des terminaux et on la remplace par une sonnerie spéciale commandée par le circuit d'interface, ce qui nécessite l'installation de liaisons électriques supplémentaires reliant le circuit d'interface à chacune des sonneries spéciales disposées au niveau des terminaux.

Pour éviter l'installation de ces connexions électriques supplémentaires, un premier système connu prévoit l'envoi de signaux modulés sur au moins l'un des fils de la ligne téléphonique qui relie les différents terminaux. Ainsi, certains fils de la ligne téléphonique sont utilisés pour une fonction autre que celle définie par l'exploitant du réseau téléphonique. Or, il est possible que cet exploitant n'autorise pas une telle modification des connexions de la ligne téléphonique, même à l'intérieur du domicile de l'abonné.

Un autre système est décrit dans le brevet des Etats-Unis d'Amérique 4 653 089 mais ce système nécessite l'emploi d'un circuit spécifique incorporant une bobine de maintien pour imposer un niveau de tension particulier sur la ligne dans l'attente d'une surnumérotation et une source d'énergie électrique.

Un objet de la présente invention est de prévoir un système téléphonique à plusieurs terminaux qui remplisse les fonctions de répondeur et d'aiguilleur automatique vers un terminal choisi par l'appelant, sans utiliser de connexions électriques supplémentaires et sans utiliser les fils de la ligne pour une fonction autre que celle prévue initialement.

Un autre objet de la présente invention est de prévoir un tel système téléphonique n'ayant pas besoin pour fonctionner d'utiliser une source d'énergie électrique supplémentaire, toute l'énergie électrique du dispositif étant prise sur la ligne téléphonique, en respectant les limites autorisées par l'exploitant du réseau téléphonique, c'est-à-dire que ce système est télé-alimenté.

L'invention concerne donc un système téléphonique à plusieurs terminaux téléphoniques sur une seule ligne, comprenant plusieurs circuits d'interface téléphonique, chaque circuit d'interface étant alimenté par des signaux de sonnerie apparaissant sur la ligne, étant disposé entre la ligne téléphonique et l'un des terminaux dont la sonnerie est déconnectée de la ligne, et comprenant un premier moyen de détection du signal de sonnerie qui apparaît lors d'un appel téléphonique.

Selon une caractéristique essentielle de l'invention, chaque circuit de l'interface comprend un premier circuit téléalimenté (c'est-à-dire tirant l'énergie nécessaire à son fonctionnement de la ligne téléphonique) de comptage et de prise de ligne, ce premier circuit recevant en entrée les signaux de sonnerie qui apparaissent dans la ligne lors d'un appel téléphonique, étant alimenté par les signaux de sonnerie et effectuant un comptage d'un nombre prédéterminé de ces signaux de sonnerie, puis effectuant une prise de ligne à l'instant ou s'interrompt le dernier signal de sonnerie ainsi compté.

Selon un mode de réalisation de la présente invention, il est prévu un circuit d'interface principal et au moins un circuit d'interface secondaire, le circuit d'interface principal comprenant en plus un troisième circuit de répondeur comprenant un synthétiseur vocal activé après la prise de ligne pour envoyer dans la ligne des paroles destinées à l'appelant l'invitant à composer l'un des numéros d'appel supplémentaires destiné à l'un des circuits de sélection.

Selon un mode de réalisation de la présente invention, le troisième circuit comprend en outre des moyens pour émettre des paroles destinées à l'appelant, en réponse à un envoi d'un numéro par l'appelant, afin d'accuser réception de cet envoi.

Selon un mode de réalisation de la présente invention, le troisième circuit comporte une mémoire constituant une boîte aux lettres permettant de mémoriser un message ou le numéro de téléphone en l'appelant, dans le cas où personne n'a décroché le terminal téléphonique appelé, à la suite de l'actionnement de la sonnerie d'appel.

Selon un mode de réalisation de la présente invention, chaque circuit d'interface comporte des moyens pour détecter le décrochement du terminal téléphonique correspondant ; émettre une fréquence déterminée dans la ligne dès que ce terminal téléphonique a décroché ; détecter la présence d'une telle fréquence en provenance d'un autre circuit d'interface ; et déconnecter la ligne en réponse à l'apparition de cette fréquence, d'où il résulte que, lorsque l'un des circuits d'interface détecte le décrochement du terminal correspondant, il envoie la fréquence déterminée dans la ligne, provoquant ainsi la déconnexion de tous les autres circuits d'interface.

Dans un système téléphonique selon l'invention, on utilise plusieurs circuits d'interface, un pour chaque terminal téléphonique, qui ont la particularité de fonctionner indépendamment les uns des autres et de prendre chacun la ligne quasi-simultanément, en réponse à un appel téléphonique. Chaque circuit d'interface dispose de son propre système de sonnerie qu'il ne fait fonctionner qu'à bon escient. Il n'est donc pas nécessaire de commander cette sonnerie à distance et, par conséquent, de disposer de liaisons électriques spéciales entre les différents terminaux pour commander de telles sonneries. En outre, les différents circuits d'interface comportent des moyens leur permettant d'échanger certaines informations afin de se synchroniser, ces informations étant constituées par des signaux de fréquences déterminées envoyés dans la ligne téléphonique.

Ces objets, caractéristiques et avantages ainsi que d'autres de la présente invention seront exposés plus en détail dans la description suivante de la présente invention faite en relation avec les figures jointes parmi lesquelles :
la figure 1 représente schématiquement l'organisation générale d'un système téléphonique selon l'invention ;
la figure 2 est un schéma montrant l'organisation générale d'un circuit d'interface principal utilisé dans un système selon l'invention ;
la figure 3 est un schéma montrant l'organisation générale d'un circuit d'interface secondaire utilisé dans un système selon l'invention ;
la figure 4 est un schéma d'un mode réalisation du circuit de téléalimentation d'un circuit d'interface selon la présente invention ;
les figures 5A à 5C illustrent l'évolution dans le temps de certains signaux du schéma de la figure 4 ; et
la figure 6 est un diagramme illustrant un mode de fonctionnement possible d'un système selon l'invention.

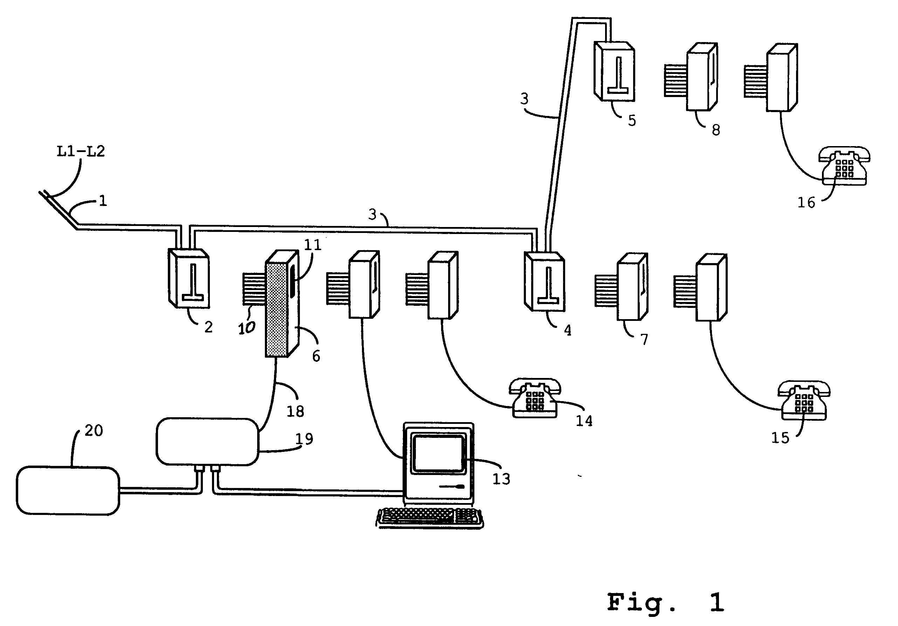

La figure 1 illustre un ensemble d'appareils qui sont installés dans le domicile d'un abonné au téléphone, cet ensemble constituant, avec la partie de ligne d'abonné installée dans le domicile, un système téléphonique selon la présente invention. La ligne d'abonné comprenant une paire de fils L1-L2 comporte un tronçon 1 provenant du réseau téléphonique et parvenant à l'entrée du domicile de l'abonné jusqu'à un premier conjoncteur 2. La ligne L1-L2 se prolonge à l'intérieur du domicile selon un tronçon 3 sur lequel sont disposés un certain nombre de conjoncteurs 4, 5. Sur les différents conjoncteurs 2, 4 et 5, l'abonné peut brancher des terminaux téléphoniques de son choix, dans l'ordre qui lui convient, cet ordre n'ayant pas d'influence sur le fonctionnement du système puisque tous les conjoncteurs sont branchés en parallèle. Sur l'un quelconque des conjoncteurs 2, on branche un circuit d'interface principal 6 et sur les autres conjoncteurs 4, 5, on branche des circuits d'interface secondaires de conception identique 7, 8. Le système téléphonique comprend donc un seul circuit d'interface principal et un ou plusieurs circuits d'interface secondaires. Chaque circuit d'interface principal ou secondaire 6, 7, 8 comprend une prise mâle 10 pour effectuer son branchement sur un conjoncteur et une prise femelle 11 permettant la connexion de la ligne avec un terminal téléphonique. Le circuit d'interface est donc intercalé entre la ligne d'abonné et un terminal.

Divers terminaux téléphoniques peuvent être branchés sur les différents circuits d'interface. A titre d'exemple, sur le circuit d'interface principal 6 est illustré un appareil de transmission par télétexte 13 ainsi qu'un poste téléphonique classique 14, et sur les circuits d'interface secondaires 7, 8 sont illustrés des postes classiques 15, 16.

Sur le circuit d'interface principal 6, il est en outre prévu, à titre d'exemple, de brancher par l'intermédiaire d'une liaison spéciale 18 un circuit d'aiguillage 19 mettant en fonctionnement soit l'appareil de télétexte 13 soit un autre appareil automatique 20 pour contrôler ou commander un équipement domestique, en réponse à des informations transmises téléphoniquement.

Lorsque la ligne L1-L2 est appelée, cela se traduit par des trains de signaux alternatifs destinés classiquement à actionner la sonnerie d'un téléphone. Chaque circuit d'interface 6, 7, 8 comporte un moyen permettant la détection de cette suite de signaux de sonnerie. Ce moyen permet de compter un certain nombre N de signaux de sonnerie fournis par la ligne téléphonique, et d'effectuer une prise de ligne à la fin du N-ième signal de sonnerie. Dans la pratique, ce nombre prédéterminé N de signaux sera égal soit à deux soit à trois.

Chaque circuit d'interface puise son énergie électrique dans les signaux de sonnerie. Classiquement, un signal d'appel contient des successions de signaux de sonnerie. Chaque signal, d'une durée de 1,5 s environ, comprend plusieurs alternances d'un signal alternatif à 50Hz d'une tension relativement élevée, par exemple 48 volts crête à crête, applicable à un poste ayant une impédance déterminée (5 kiloohms). Comme chaque circuit d'interface effectue son action de prise de ligne après un certain nombre de trains du signal de sonnerie, on prévoit selon l'invention d'accumuler, par exemple dans un condensateur de relativement forte capacité, une énergie électrique suffisante pour actionner un relais effectuant la prise de ligne.

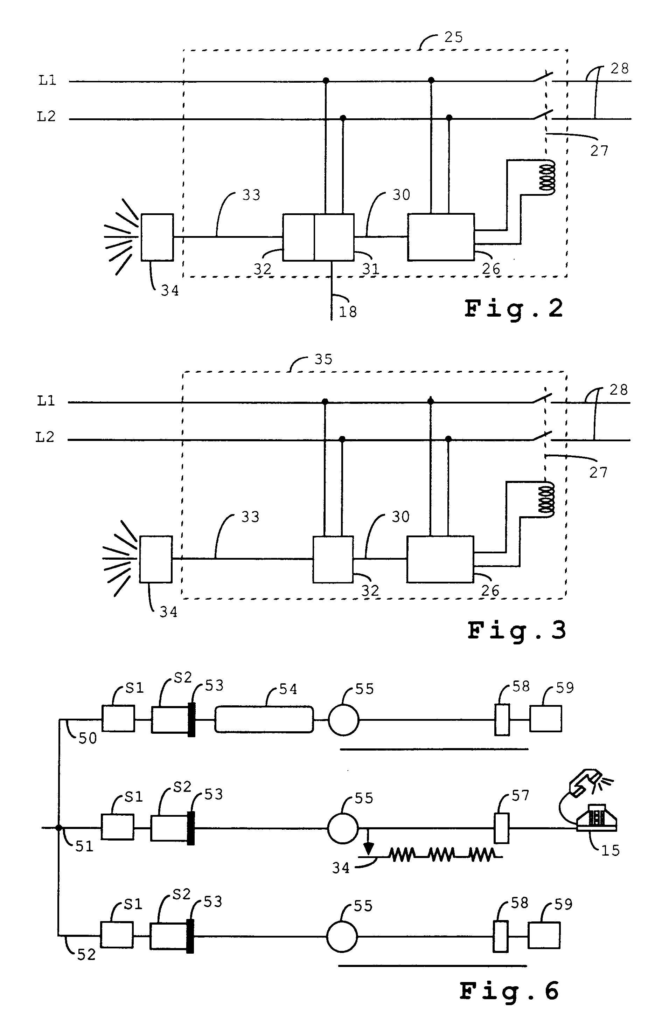

Les figures 2 et 3 représentent schématiquement les différentes fonctions que remplissent respectivement les circuits d'interface principal et secondaire.

Dans la figure 2, le circuit électronique 25 du circuit d'interface principal 6 comprend un circuit de comptage et de prise de ligne 26 relié aux lignes L1 et L2 de la ligne téléphonique. Le circuit 26 permet de compter les N premiers signaux de sonnerie, par exemple les 2 premiers, apparaissant lors d'un appel et d'actionner électriquement un contacteur 27 juste au moment où le N-ième signal de sonnerie s'interrompt afin d'effectuer la prise de ligne pour un usage par un terminal téléphonique (non représenté) branché sur la sortie 28. Lorsque le circuit 26 a déclenché la prise de ligne, il envoie un signal par une connexion 30 à un circuit répondeur 31 qui est destiné à établir des séquences vocales permettant de communiquer avec l'appelant afin d'inviter l'appelant à composer un numéro désignant l'un des terminaux téléphoniques. Si l'appelant envoie sur la ligne un numéro correspondant à celui, mémorisé en permanence dans un circuit de sélection 32, du terminal branché sur ce circuit d'interface, le circuit 32 envoie sur une ligne 33 un signal électrique actionnant une sonnerie 34 qui imite dans ses séquences, une sonnerie classique d'appel téléphonique. La sonnerie 34 peut être un transducteur acoustique ayant un très haut rendement. L'abonné peut également envoyer dans la ligne un autre code correspondant à la mise en communication de cet abonné directement avec un appareil automatique spécifique constitué, par exemple, d'un appareil de communication par télétexte 13 ou d'un appareil automatique quelconque 20.

Le circuit 31 peut assurer divers échanges d'information vocale automatique avec l'appelant. Par exemple, ce circuit 31 peut comporter un circuit de mémoire constituant une boîte aux lettres permettant de mémoriser un message ou le numéro de téléphone de l'appelant, dans le cas où personne n'a décroché le terminal téléphonique appelé, à la suite de l'appel. Le circuit 31 peut également utiliser le synthétiseur vocal pour émettre des paroles destinées à l'appelant, en réponse à l'envoi d'un numéro par l'appelant, afin d'accuser réception de cet envoi et de permettre à l'appelant de vérifier si le numéro qu'il a envoyé est bien celui qu'il souhaitait.

La figure 3 représente les circuits électroniques 35 d'un circuit d'interface secondaire 7, 8. Le circuit 35 comporte sensiblement les mêmes éléments que le circuit 25, les éléments remplissant les mêmes fonctions dans ces deux circuits portant les mêmes repères. Le circuit 35 se différencie du circuit 25 uniquement en ce qu'il ne comporte pas de circuit répondeur 31. Les circuits de comptage et de prise de ligne 26 étant identiques dans les circuits d'interface principal et secondaires, ils prendront la ligne de façon quasi-simultanée. Le circuit d'interface principal est ensuite le seul à envoyer des informations à l'appelant, par l'intermédiaire du circuit 31. Après cela, les circuits 32 présents dans tous les circuits d'interface fonctionnent pour déterminer quel terminal téléphonique est sélectionné par l'appelant lorsque celui-ci effectue une numérotation supplémentaire.

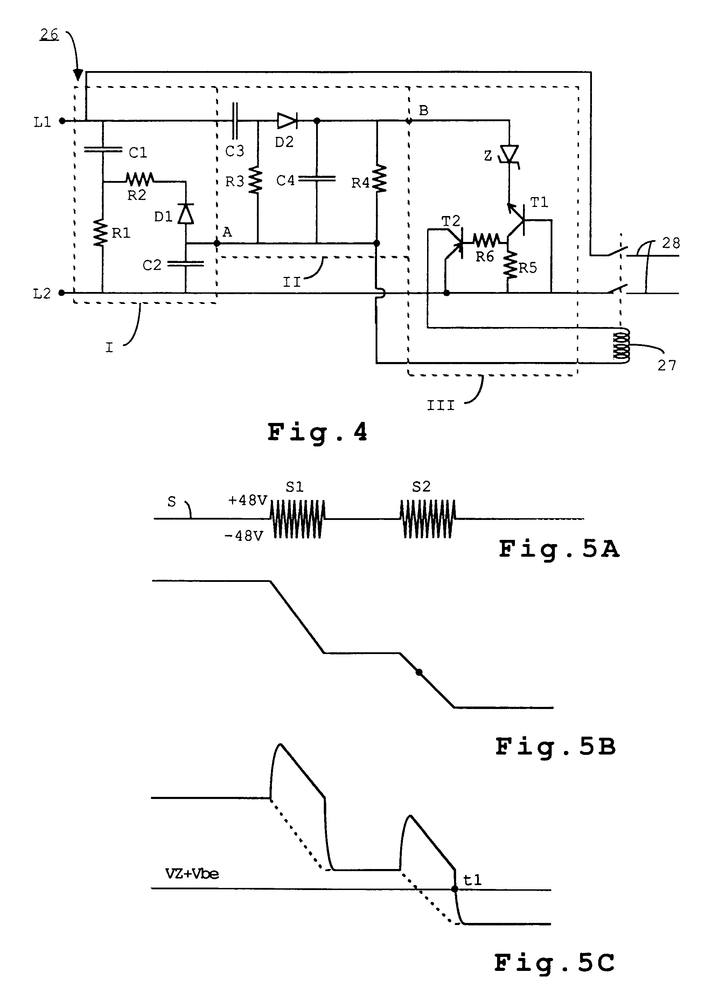

La figure 4 représente un exemple de mise en oeuvre du circuit de comptage et de prise de ligne 26. Le circuit 26, relié à la paire de fils téléphoniques L1 et L2, peut se décomposer en trois parties à savoir un circuit de stockage I, un circuit de décalage de niveau II et un circuit de déclenchement III.

Le circuit de stockage I comprend, entre les fils L1 et L2, un condensateur C1 en série avec une résistance R1. En parallèle sur la résistance R1 est disposée en connexion en série d'une résistance R2, d'une diode D1 et d'un condensateur C2. La diode D1 est passante dans le sens du fil L2 vers le fil L1. Le point de raccordement entre le condensateur C2 et la diode D1, qui constitue la sortie de ce circuit de stockage I, est désigné par la référence A.

Le circuit de décalage de niveau II est connecté entre le fil L1 et le point A entre lesquels sont disposés en série un condensateur C3 et une résistance R3. En parallèle sur la résistance R3, sont montés en série une diode D2 et un condensateur C4. En parallèle sur le condensateur C4 est montée une résistance R4. La diode D2 est passante du fil L1 vers le fil L2 (par le trajet fil L1, condensateur C3, diode D2, condensateur C4, condensateur C2, fil L2). Le point de raccordement de la diode D2 et du condensateur C4 est désigné par la référence B.

Le circuit de déclenchement III est disposé entre le point B et le fil L2 entre lesquels sont montés en série une diode zener Z, un transistor NPN T1 et une résistance R5. La base du transistor T1 est reliée au fil L2 et le collecteur du transistor T1 est relié à la base d'un transistor PNP T2 par l'intermédiaire d'une résistance R6. Ce transistor T2 est monté en série avec la bobine de relais d'impulsion 27 (voir figures 2 et 3) entre le point A et le fil L2.

Le fonctionnement du circuit de la figure 4 va être expliqué en relation avec les figures 5A à 5C parmi lesquelles, la figure 5A représente le signal d'appel S, ce signal étant constitué d'une suite de signaux de sonnerie (S1, S2), la figure 5B illustre la tension au point A, et la figure 5C illustre la tension au point B.

Dans le circuit de stockage I, le condensateur de plus forte valeur est le condensateur C2 qui est destiné à accumuler de l'énergie pour actionner le relais 27. La résistance R2 est choisie pour que la constante de temps de charge du condensateur C2 soit nettement supérieure à la durée d'un signal de sonnerie (S1, S2). Ainsi, comme le représente la figure 5B, le condensateur C2 se charge progressivement (négativement) au cours de chaque train de signal de sonnerie.

Le circuit de décalage de niveau II comprend essentiellement un condensateur C4 qui se charge très rapidement (par le trajet C3, D2, C4, C2) dès la première alternance positive d'un signal de sonnerie. Entre les signaux de sonnerie, le condensateur C4 se décharge dans la résistance R4. La constante de temps C4-R4 est choisie pour que cette décharge soit relativement rapide et corresponde à la durée de quelques alternances du signal de sonnerie de façon à éviter une décharge pendant les alternances négatives entre deux alternances positives.

Ainsi, comme le représente la figure 5C, dès qu'un signal de sonnerie arrive, la tension au point B croît très rapidement sous l'effet de la charge immédiate du condensateur C4 puis décroît progressivement sous l'effet de la charge plus lente du condensateur C2. A la fin du signal de sonnerie, le condensateur C2 garde sa charge et le condensateur C4 se décharge rapidement dans la résistance R4.

Le circuit de déclenchement III détecte le moment où la tension au point B devient supérieur en valeur absolue à la somme des chutes de tension dans la diode zener Z et dans le transistor T1 (VZ+VBE). Comme le montre la figure 5C, cet événement se situe nécessairement à un instant t1 situé peu après la fin d'un signal de sonnerie. Alors, le transistor T2 devient passant et le condensateur C2 se décharge dans la bobine 27.

Il peut exister certaines disparités dans le fonctionnement des différents circuits d'interface, ce qui fait que ces circuits ne vont pas tous effectuer leur prise de ligne de façon parfaitement simultanée. Ceci n'entraîne aucun dysfonctionnement parce que, lorsque l'un des circuits d'interface effectue la prise de ligne légèrement avant les autres circuits, cette première prise de ligne provoque l'interruption quasi-immédiate du signal de sonnerie, ce qui provoque le déclenchement quasi-immédiat des autres circuits d'interface.

A titre d'exemple, on pourra choisir pour les principaux condensateurs du circuit les valeurs suivantes :
- condensateur C1 : 1,5 microfarads,
- condensateur C2 : 100 microfarads,
- condensateur C3 : 0,47 microfarads,
- condensateur C4 : 4,7 microfarads.

La valeur de la résistance R1 est choisie pour une adaptation convenable de l'impédance de ligne.

Ainsi, le circuit 26 est un circuit téléalimenté qui provoque une prise de ligne après un nombre, choisi à l'avance, de signaux de sonnerie.

La figure 6 est un diagramme illustrant un mode de fonctionnement possible du système téléphonique selon l'invention. Les lignes 50, 51 et 52 illustrent respectivement la chronologie des événements dans le circuit d'interface principal 6 et dans les circuits d'interface secondaires 7 et 8. Des événements survenant au même instant dans plusieurs de ces lignes sont dessinés sur une même verticale par rapport à la feuille.

Dans un premier temps tous les circuits d'interface reçoivent le premier signal de sonnerie S1, puis le second signal de sonnerie S2. A la fin du signal de sonnerie S2, tous les circuits d'interface prennent la ligne simultanément (trait 53). Ensuite, le circuit d'interface principal envoie dans la ligne une information vocale (54), puis tous les circuits d'interface reçoivent simultanément un numéro supplémentaire envoyé par l'appelant (cercle 55). Dans cet exemple, c'est le circuit d'interface secondaire correspondant à la ligne 51 qui a reconnu son propre numéro et qui commande sa sonnerie 34. Ce circuit d'interface secondaire détecte ensuite le décrochage de son terminal 15 et envoie dans la ligne un signal (représenté par le rectangle 57) qui est reçu immédiatement par les autres circuits d'interface (rectangles 58) qui raccrochent leur ligne (59). L'appelant communique alors seulement avec la personne (ou l'appareil) ayant décroché le terminal 15.

Le système téléphonique selon la présente invention permet d'envisager un grand nombre d'autres processus d'échanges d'informations et d'autres modes d'utilisation.

## Revendications

1. Système téléphonique à plusieurs terminaux téléphoniques sur une seule ligne comprenant plusieurs circuits d'interface téléphoniques (6, 7, 8) disposés entre la ligne (3) et chacun des terminaux (13, 14, 15, 16), chaque circuit d'interface comprenant un premier circuit (26) comprenant des moyens de comptage d'un nombre prédéterminé de signaux de sonnerie (S1, S2) apparaissent sur la ligne (L1-L2), caractérisé en ce que ce premier circuit comprend des moyens (I) de stockage d'énergie à partir des signaux de sonnerie et des moyens (III, 27, 28) de prise de ligne après ledit nombre prédéterminé de signaux de sonnerie, les moyens de stockage (I) alimentant les moyens de comptage et les moyens de prise de ligne.

2. Système téléphonique selon la revendication 1, caractérisé en ce que les moyens de stockage (I) comprennent un condensateur (C2) en série avec une diode (D1).

3. Système téléphonique selon la revendication 1, caractérisé en ce que les moyens de stockage (I) comprennent, aux bornes de la ligne, un premier condensateur (C1) en série avec une première résistance (R1) et, en parallèle avec ladite première résistance, un deuxième condensateur de capacité élevée (C2) en série avec une diode (D1) et une deuxième résistance (R2), le point de connexion du deuxième condensateur et de la diode constituant la sortie (A) desdits moyens de stockage.

4. Système téléphonique selon la revendication 1, caractérisé en ce que les moyens de comptage comprennent un circuit de décalage (II) de tension fournissant sur une première borne de sortie (B) une tension qui s'incrémente brutalement à la fin de chaque signal de sonnerie et des moyens (Z, T1) de comparaison à un seuil.

5. Système téléphonique selon la revendication 3 et 4, caractérisé en ce que le circuit de décalage (II) de tension comprend, entre un fil (L1) de la ligne et ladite sortie (A), un troisième condensateur (C3) et une troisième résistance (R3) ; en parralèle sur la troisième résistance, une deuxième diode (D2) et un quatrième condensateur (C4) en série ; et, en parallèle sur le quatrième condensateur une quatrième résistance (R4).

6. Système téléphonique selon la revendication 1, caractérisé en ce que chaque circuit d'interface comprend :
- un second circuit (32) de sélection, pour après la prise de ligne, reconnaître un numéro d'appel supplémentaire (55) déterminé envoyé sur la ligne par un appelant ; et
- une sonnerie (34) commandée par le second circuit (32) lorsque celui-ci a reconnu le numéro d'appel supplémentaire comme correspondant à son terminal.

7. Système téléphonique selon la revendication 4, caractérisé en ce qu'il comprend un circuit d'interface principal (6) et au moins un circuit d'interface secondaire (7, 8), le circuit d'interface principal comprenant en plus un troisième circuit (31) de répondeur comprenant un synthétiseur vocal activé après la prise de ligne pour envoyer dans la ligne des paroles destinées à l'appelant l'invitant à composer l'un des numéros d'appel supplémentaires destiné à l'un des circuits de sélection.

8. Système téléphonique selon l'une quelconque des revendications précédentes, caractérisé en ce que chaque circuit d'interface comporte des moyens pour :
- détecter le décrochement du terminal téléphonique correspondant,
- émettre une fréquence déterminée (57) dans la ligne dès que ce terminal téléphonique a décroché,
- détecter la présence d'une telle fréquence (58) en provenance d'un autre circuit d'interface, et
- déconnecter la ligne en réponse à l'apparition de cette fréquence ;
d'où il résulte que, lorsque l'un des circuits d'interface détecte le décrochement du terminal correspondant, il envoie la fréquence déterminée dans la ligne, provoquant ainsi la déconnexion de tous les autres circuits d'interface.

## Patentansprüche

1. Fernsprechsystem mit mehreren Fernsprechendgeräten auf einer einzelnen Leitung, mit mehreren Fernsprech-Schnittstellenschaltungen (6, 7, 8), die zwischen der Leitung (3) und jedem der Endgeräte (13, 14, 15, 16) angeordnet sind, wobei jede Schnittstellenschaltung eine erste Schaltung (26) mit Einrichtungen zum Zählen einer vorbestimmten Anzahl von auf der Leitung (L1-L2) auftretenden Rufsignalen (S1, S2) aufweist, dadurch gekennzeichnet, daß die erste Schaltung Einrichtungen (I) zum Speichern von Energie aus den Rufsignalen und Einrichtungen (III, 27, 28) zum Annehmen des Anrufes nach der genannten vorbestimmten Anzahl von Rufsignalen aufweist, und daß die Speichereinrichtungen (I) die Zähleinrichtungen und die Einrichtungen zum Annehmen des Anrufes versorgen.

2. Fernsprechsystem nach Anspruch 1, dadurch gekennzeichnet, daß die Speichereinrichtungen (1) einen Kondensator (C2) in Serie mit einer Diode (D1) aufweisen.

3. Fernsprechsystem nach Anspruch 1, dadurch gekennzeichnet, daß die Speichereinrichtungen (I) an den Anschlüssen der Leitung einen ersten Kondensator (C1) in Serie mit einem ersten Widerstand (R1) und parallel mit diesem ersten Widerstand einen zweiten Kondensator (C2) mit erhöhtem Kapazitätswert in Serie mit einer Diode (D1) und einem zweiten Widerstand (R2) aufweisen, wobei der Verbindungspunkt des zweiten Kondensators und der Diode den Ausgang (A) der Speichereinrichtungen bildet.

4. Fernsprechsystem nach Anspruch 1, dadurch gekennzeichnet, daß die Zähleinrichtungen eine Schaltung (II) zur Spannungsverschiebung, die an einem ersten Ausgangsanschluß (B) eine Spannung liefert, die sich abrupt am Ende eines jeden Rufsignales erhöht, und Einrichtungen (Z, T1) zum Vergleich mit einer Schwelle aufweist.

5. Fernsprechsystem nach den Ansprüchen 3 und 4, dadurch gekennzeichnet, daß die Schaltung (II) zum Verschieben der Spannung zwischen einem Draht (L1) der Leitung und dem genannten Ausgang (A) einen dritten Kondensator (C3) und einen dritten Widerstand (R3), parallel zu dem dritten Widerstand eine zweite Diode (D2) und einen vierten Kondensator (C4) in Serie sowie parallel zu dem vierten Kondensator einen vierten Widerstand (R4) aufweist.

6. Fernsprechsystem nach Anspruch 1, dadurch gekennzeichnet, daß jede Schnittstellenschaltung aufweist:
- eine zweite Wahlschaltung (32), um nach dem Annehemen des Anrufes eine zusätzliche bestimmte Rufnummer (55) zu erkennen, die von einem Anrufer auf die Leitung gegeben wurde; und
- eine Klingel (34), die durch die zweite Schaltung (32) angesteuert wird, wenn diese die zusätzliche Rufnummer als ihrem Anschluß zugehörig erkannt hat.

7. Fernsprechsystem nach Anspruch 4, dadurch gekennzeichnet, daß es eine Hauptschnittstellenschaltung (6) und zumindest eine Sekundärschnittstellenschaltung (7, 8) aufweist, wobei die Hauptschnittstellenschaltung darüberhinaus eine dritte Antwortschaltung (31) aufweist, die einen Anrufbeantworter umfaßt, der nach dem Annehemn des Anrufes aktiviert wird, um auf die Leitung bestimmte Worte an den Anrufer zu richten, die diesen zum Wählen einer der zusätzlichen Rufnummern, die einer der Wahlschaltungen zugeteilt ist, auffordern.

8. Fernsprechsystem nach einem der vorhergehenden Ansprüche, dadurch gekennzeichnet, daß jede Schnittstellenschaltung Einrichtungen aufweist, um
- das Annehmen des Anrufes an dem entsprechenden Fernsprechendgerät zu detektieren,
- eine vorbestimmte Frequenz (47) auf die Leitung zu schicken, sobald an diesem Fernsprechendgerät der Anruf angenommen ist,
- die Anwesenheit einer solchen von einer anderen Schnittstellenschaltung herrührenden Frequenz (58) zu detektieren, und
- die Leitung als Antwort auf das Erscheinen dieser Frequenz abzuschalten,
so daß eine der Schnittstellenschaltungen, sobald sie das Annehmen des Anrufes an dem entsprechenden Endgerät detektiert, die vorbestimmte Frequenz auf die Leitung sendet und damit die Abschaltung aller anderen Schnittstellenschaltungen hervorruft.

## Claims

1. A telephone system comprising several telephone terminals on a single telephone line comprised of several telephone interface circuits (6, 7, 8) arranged between the line (3) and each of the terminals (13, 14, 15, 16), each interface circuit comprising a first circuit (26) comprising means for counting a predetermined number of ringing signals (S1, S2) appearing on the line (L1-L2), characterized in that the first circuit comprises means (I) for storing power from the ringing signals and means (III, 27, 28) for picking up the line after said predetermined number of ringing signals, said storing means (I) energizing said counting means (II) and said picking up means.

2. A telephone system according to claim 1, characterized in that said storing means (I) comprise a capacitor (C2) in series with a diode (D1).

3. A telephone system according to claim 1, characterized in that said storing means (I) comprise, across the line terminals, a first capacitor (C1) in series with a first resistor (R1) and, in parallel with said first resistor, a second high value capacitor (C2) in series with a diode (D1) and a second resistor (R2), the junction of said second capacitor and said diode constituting the output (A) of said storing means.

4. A telephone system according to claim 1, characterized in that the counting means comprise a voltage offset circuit (II) providing to a first output terminal (B) a voltage which abruptly increases at the end of each ringing signal and means (Z, T1) for threshold comparison.

5. A telephone system according to claims 3 and 4, characterized in that the voltage offset circuit (II) comprises, between a wire (L1) of said line and said output (A) of the storing means, a third capacitor (C3) and a third resistor (R3); in parallel on the third resistor, a second diode (D2) and a fourth capacitor (C4) in series; and, in parallel on said fourth capacitor a fourth resistor (R4).

6. A telephone system according to claim 1, characterized in that each interface circuit comprises:
- a selection circuit (32) for, after picking up of the line, recognizing an additional determined call number (55) sent to the line by a caller; and
- a ringing tone (34) controlled by said selection circuit (32) when the latter has recognized the additional call number as the one corresponding to its terminal.

7. A telephone system according to claim 4, characterized in that it comprises a main interface circuit (6) and at least one secondary interface circuit (7, 8), the main interface circuit further comprising a third answering circuit (31) comprising a vocal synthesizer activated once the line has been picked up for sending on the line speech signals to the caller asking him to dial one of the additional call numbers intended for one of the selection circuits.

8. A telephone system according to any of claims 1 to 7, characterized in that each interface circuit comprises means for:
- detecting the hooking off of the corresponding telephone terminal,
- emitting a determined frequency (57) in the line as soon as this telephone terminal is hooked off,
- detecting the presence of such a frequency (58) from another interface circuit, and
- disconnecting the line in response to the occurrence of this frequency;
whereby, when one of the interface circuits detects the hooking off of the corresponding terminal, it sends the determined frequency to the line, thus causing all other interface circuits to be disconnected.
